# DEMANDE DE BREVET EUROPEEN

(11) **EP 1 661 745 A1**
(43) Date de publication de la demande: **31.05.2006**
(21) Numéro de dépôt: 05110909.8
(22) Date de dépôt: 17.11.2005
(51) Int. Cl.: B60J 10/06, B60J 1/17, B60J 1/18

(54) **Porte de véhicule automobile à vitre affleurante, ensemble vitré et véhicule correspondants.**

(30) Priorité: 30.11.2004 FR 0412716
(71) Demandeur: WAGON SAS, 79302 Bressuire Cédex (FR)
(72) Inventeur: MOREAU, M. Stéphane, 79700, LE TEMPLE (FR)
(74) Mandataire: Bioret, Ludovic

(57) **Abrégé**

L'invention concerne une porte de véhicule automobile, comprenant un caisson de carrosserie et un ensemble vitré assemblés l'un à l'autre, l'ensemble vitré comprenant au moins un panneau vitré mobile (4), susceptible de s'escamoter au moins partiellement à l'intérieur dudit caisson entre une position d'obturation et au moins une position d'ouverture, en coulissant dans un plan de coulissement par rapport à au moins un montant (3) solidaire du caisson de carrosserie ou de la carrosserie du véhicule. Selon l'invention, une telle porte comprend des moyens de décalage du plan de coulissement vers l'intérieur du véhicule, par rapport à un plan d'obturation dans lequel se trouve le panneau mobile (4) en position d'obturation, et le panneau mobile (4) agit sur au moins un joint d'étanchéité (1), de façon qu'il passe d'une position d'étanchéité à une position inactive, lorsque le panneau mobile (4) passe du plan d'obturation au plan de coulissement, et inversement.

## Description

Le domaine de l'invention est celui des baies ménagées dans les portes de véhicule. Plus précisément, l'invention concerne les dispositifs d'obturation d'une baie ménagée dans une porte d'un véhicule automobile et comprenant une partie mobile par exemple selon une direction essentiellement verticale, susceptible de fermer ou de libérer une ouverture.

L'invention s'applique en particulier, mais non exclusivement, aux portes latérales des véhicules automobiles. Elle peut s'appliquer également, par exemple, aux portes battantes et coulissantes de véhicules, y compris les portes arrière, hayons, ...

Classiquement, pour obturer la baie d'un véhicule, qu'il s'agisse d'une automobile, d'un véhicule utilitaire, d'un camion, d'un autobus ou d'un wagon de chemin de fer, on rapporte une vitre, maintenue par un cadre de liaison. Ce dernier présente une partie interne et une partie externe, qui viennent pincer simultanément les bords de la vitre, avec une garniture d'étanchéité.

La technique la plus couramment répandue pour l'ouverture et la fermeture des vitres est de rendre celle-ci mobile verticalement dans son propre plan, en la faisant pénétrer ou sortir du caisson ou de la garniture des portes latérales.

Cette technique est aujourd'hui couramment utilisée et des solutions pour l'automatiser sont connues. L'équipement des automobiles en vitres électriques est aujourd'hui très répandu.

Parallèlement, une autre technique a été proposée par le Titulaire de la présente demande de brevet. Les principes de base de cette technique sont notamment décrits dans les documents de brevet EP-0 778 168 et EP - 0 857 844.

Grâce à cette technique, on produit des « baies flush » qui présentent, sur le plan esthétique, vues de l'extérieur, un aspect lisse, affleurant du fait qu'aucun cadre n'est nécessaire.

Les « baies flush » comprennent un ensemble fixe et une partie mobile, l'ensemble fixe étant destiné à être monté dans le logement défini à cet effet sur la carrosserie du véhicule.

Or, les baies ménagées dans les portes ont des dimensions relativement limitées qu'il n'est donc généralement pas opportun de réduire davantage en rapportant un ensemble fixe selon la technique antérieure.

Pourtant, il est souhaitable de pouvoir équiper certains véhicules, par exemple des véhicules luxueux ou des monospaces, de baies affleurantes.

Un dispositif dans lequel on met en oeuvre, pour la mobilité du panneau vitré, une décomposition de mouvements de déplacement longitudinal et d'enchâssement transversal est notamment décrit dans le document de brevet publié sous le numéro FR - 2 847 520 au nom de la Demanderesse. Selon la technique décrite dans ce document, on prévoit de monter le panneau coulissant sur des rampes de louvoiement de telle sorte que le panneau s'écarte légèrement du plan d'obturation vers un plan de coulissement dans lequel il peut ensuite être déplacé dans différentes positions d'ouverture.

Ceci permet d'éloigner légèrement le panneau vitré mobile d'un joint d'étanchéité lors de l'ouverture, évitant de détériorer ledit joint d'étanchéité, et de ramener le panneau vitré mobile et ledit joint d'étanchéité en appui l'un contre l'autre, dans la position d'obturation.

Toujours selon cette technique, le panneau est écarté du plan d'obturation vers l'extérieur du véhicule.

Or, notamment pour proposer une intégration encore plus aboutie du panneau vitré sur une porte de véhicule, une alternative est souhaitable, consistant à décaler la vitre vers l'intérieur du véhicule lors de sa phase descendante.

Dans ce cas toutefois, le joint d'étanchéité sur lequel le panneau vitré appuie en position d'obturation forme un obstacle au louvoiement du panneau vers l'intérieur du véhicule.

La présente invention a donc pour objectif de pallier ces inconvénients et de fournir une porte à panneau vitré affleurant dans laquelle le panneau peut être coulissé, lors de l'ouverture, en procédant à un décalage du panneau vers l'intérieur du véhicule, ceci tout en mettant en oeuvre un joint d'étanchéité sur lequel le panneau appuie vers l'intérieur du véhicule en position d'obturation.

L'invention a également pour objectif de fournir une telle porte dont on assure l'étanchéité de façon fiable et pérenne.

L'invention a aussi pour objectif de fournir une telle porte qui évite d'induire des effets néfastes et indésirables entre le panneau mobile et les moyens d'étanchéité associés.

L'invention a également pour objectif de fournir une telle porte qui permette de réaliser des portières présentant des caractéristiques nouvelles, notamment en ce qui concerne l'esthétisme et l'ergonomie.

Un autre objectif de l'invention est de fournir une telle porte qui soit simple de conception et facile à mettre en oeuvre.

Ces objectifs ainsi que d'autres qui apparaîtront par la suite, sont atteints à l'aide d'une porte de véhicule automobile, comprenant un caisson de carrosserie et un ensemble vitré assemblés l'un à l'autre, ledit ensemble vitré comprenant au moins un panneau vitré mobile, susceptible de s'escamoter au moins partiellement à l'intérieur dudit caisson entre une position d'obturation et au moins une position d'ouverture, en coulissant dans un plan de coulissement par rapport à au moins un montant solidaire dudit caisson de carrosserie ou de la carrosserie dudit véhicule, comprenant des moyens de décalage dudit plan de coulissement vers l'intérieur dudit véhicule, par rapport à un plan d'obturation dans lequel se trouve ledit panneau mobile en position d'obturation, ledit panneau mobile agissant sur au moins un joint d'étanchéité, de façon qu'il passe d'une position d'étanchéité à une position inactive, lorsque ledit panneau mobile passe dudit plan d'obturation audit plan de coulissement, et inversement.

De cette façon, on assure de façon classique l'étanchéité du dispositif lorsque le panneau mobile est en position d'obturation, tout en permettant de décaler le panneau vers l'intérieur du véhicule en vue de le faire coulisser, de façon simple et efficace.

En outre, l'invention permet d'obtenir une intégration des panneaux vitrés dans une portière de véhicule plus esthétique qu'avec les solutions de l'art antérieur.

Selon une solution préférée, ledit joint d'étanchéité est monté mobile par rapport audit ou auxdits montants de sorte que, dans ladite position inactive, ledit joint d'étanchéité est décalé vers l'intérieur dudit véhicule par rapport à ladite position d'étanchéité, et éloigné dudit panneau mobile et/ou du ou desdits montants.

Ainsi, on évite, ou à tout le moins, on limite les effets néfastes ou indésirables qui pourraient intervenir du fait de l'interaction entre le joint d'étanchéité et le panneau mobile ou les montants.

En effet, en écartant le joint, pendant que le panneau coulisse, de l'élément qui appuie sur le joint en position d'obturation, on évite :
- une usure prématurée du joint d'étanchéité susceptible d'être provoquée par les frottements successifs du panneau ou des montants contre le joint ;
- des bruits (tels que des crissements), à nouveau du fait du frottement du panneau ou des montants contre le joint, de tels bruits pouvant augmenter avec les modifications de structure du joint du fait des variations de température, d'humidité ou encore du fait du rayonnement du soleil, de l'usure...

Selon un premier mode de réalisation, ledit joint est porté par un support monté mobile, et par exemple pivotant, sur ledit ou lesdits montants.

On obtient de cette façon un moyen simple et efficace pour permettre la mobilité du joint d'étanchéité.

Dans ce cas, ledit support comprend préférentiellement une pièce élastiquement déformable formant charnière.

Selon une solution avantageuse, ledit support présente une forme de gouttière à l'intérieur de laquelle est monté ledit joint d'étanchéité, l'un des bords de ladite gouttière étant relié de façon mobile audit montant.

On obtient ainsi une solution simple et efficace, qui offre de plus une grande simplicité pour le montage du joint, ce dernier venant simplement s'emboîter dans le creux de la gouttière.

Avantageusement, ledit support pivotant présente au moins une patte destinée à coopérer avec un élément d'actionnement porté par ledit panneau, ledit élément d'actionnement étant prévu pour pousser ledit support vers ladite position d'étanchéité lors du passage dudit panneau dudit plan de coulissement vers ledit plan d'obturation.

Dans ce cas, ladite patte est préférentiellement formée sur le bord de ladite gouttière opposé audit bord relié audit montant.

Préférentiellement, ledit élément d'actionnement est porté par un support d'au moins un patin de coulissement monté dans une rampe de guidage solidaire du ou desdits montants.

Un tel agencement permet de limiter le nombre des pièces exerçant les fonctions de l'invention, et de réduire l'encombrement de l'ensemble.

Selon un deuxième mode de réalisation, ledit joint est porté par ledit panneau, ledit joint étant, en position d'étanchéité, comprimé contre au moins une partie du ou desdits montants.

Ce mode de réalisation assure une grande simplicité de fonctionnement, la mobilité du joint étant directement assurée par le panneau qui porte le joint.

Préférentiellement, ledit joint est porté par un support d'au moins un patin de coulissement monté dans une rampe de guidage solidaire dudit ou desdits montants.

A nouveau, on limite ainsi le nombre des pièces exerçant les fonctions de l'invention, et on réduit l'encombrement de l'ensemble.

Selon une solution avantageuse, ledit support présente une surface de réception dudit joint, ladite surface s'étendant au-delà du périmètre dudit panneau de façon à présenter ledit joint en regard d'au moins une partie dudit ou desdits montants.

Avantageusement, ladite porte présente deux montants reliés par une traverse supérieure pour former un cadre, ledit joint s'étendant sur au moins une portion latérale et au moins une portion supérieure dudit cadre.

Dans ce cas, ladite portion latérale et ladite portion supérieure sont préférentiellement reliées, en position d'étanchéité, par une liaison à labyrinthe.

Selon l'un ou l'autre des deux modes de réalisation qui viennent d'être décrits, ledit joint comprend un joint de type tubulaire.

Une telle structure tubulaire du joint permet d'obtenir tant une étanchéité à l'eau qu'une isolation acoustique.

Selon un troisième mode de réalisation, ledit joint comprend un joint de type à haute compressibilité.

Un tel joint peut être comprimé par le panneau lorsque celui-ci se déplace vers l'intérieur du véhicule, ceci sans engendrer de frottements excessifs.

Dans ce cas, ledit joint à haute compressibilité est avantageusement monté sur ledit panneau.

L'invention concerne aussi un ensemble vitré d'une porte telle que décrite ci-dessus, et un véhicule équipé d'une ou plusieurs portes selon l'invention, telles que décrites ci-dessus.

D'autres caractéristiques et avantages de l'invention apparaîtront plus clairement à la lecture de la description suivante de trois modes de réalisation préférentiels de l'invention, donnés à titre d'exemples illustratifs et non limitatifs, et des dessins annexés parmi lesquels :
- la figure 1 est une vue en coupe d'une partie latérale d'une porte selon un premier mode de réalisation de l'invention ;
- les figures 2 et 3 sont des vues en coupe d'une partie latérale d'une porte selon un deuxième mode de réalisation de l'invention, respectivement en position d'obturation et en position de coulissement du panneau ;
- la figure 4 est une vue en coupe d'une partie supérieure d'une porte selon le deuxième mode de réalisation de l'invention ;
- les figures 5 et 6 sont des vues en coupe d'une partie latérale d'une porte selon un troisième mode de réalisation de l'invention, respectivement en position d'obturation et en position de coulissement du panneau ;
- la figure 7 est une vue en coupe d'une partie supérieure d'une porte selon le troisième mode de réalisation de l'invention.

Tel que déjà mentionné précédemment, le principe de l'invention réside dans le fait de prévoir une porte de véhicule dans lequel le panneau coulissant peut être déplacé à partir d'un plan d'obturation vers l'intérieur du véhicule en vue de coulisser dans un plan parallèle au plan d'obturation, ou inversement, le panneau étant prévu pour « commander » la position d'un joint d'étanchéité de façon que ce dernier soit en position d'étanchéité ou en position inactive.

On note que le passage du panneau mobile du plan d'obturation à un plan de coulissement parallèle au plan d'obturation peut être obtenu à l'aide de rampes de louvoiement portées par le ou les montants de la porte selon un principe similaire à celui déjà décrit dans le document de brevet publié sous le numéro FR - 2 847 520 au nom de la Demanderesse. Une décomposition des mouvements (décalage puis coulissement) est également possible.

Selon une approche préférée de l'invention, le joint est monté mobile par rapport à au moins un montant de porte de telle sorte que ladite position inactive de ladite partie d'appui soit en retrait vers l'intérieur dudit véhicule par rapport à ladite position d'étanchéité, et écarté du panneau et/ou du montant.

Les deux premiers modes de réalisation décrits ci-après illustrent cette approche.

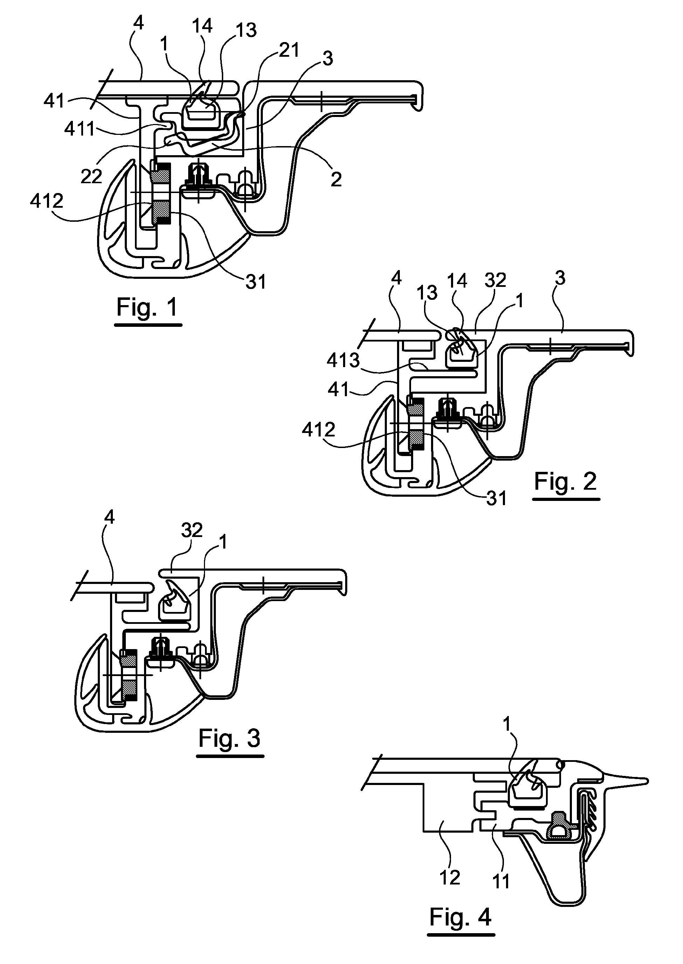

Selon un premier mode de réalisation illustré par la figure 1, un joint d'étanchéité 1 est monté dans un support pivotant qui prend la forme d'une gouttière 2 au creux de laquelle prend place le joint.

Cette gouttière 2 est réalisée dans un matériau plastique et présente un bord 21 élastiquement déformable dont l'extrémité est solidaire d'un montant 3 de porte.

Le bord 21 forme une charnière de sorte que la gouttière 2 puisse pivoter entre une position dans laquelle le joint est comprimé par le panneau 4 lorsque celui-ci est en position d'obturation (correspondant à la position haute de la gouttière 2 sur la figure 1), et une position dans laquelle la gouttière est dirigée vers l'intérieur du véhicule (position basse de la gouttière 2 sur la figure 1) de façon à amener le joint dans une position inactive, permettant le déplacement du panneau 4 vers l'intérieur du véhicule sans effort et sans occasionner une dégradation du joint.

La gouttière 2 présente de plus une patte 22, opposée au bord 21 formant charnière, destinée à coopérer avec un élément d'actionnement 411 porté par le panneau 4 de telle sorte que, quand le panneau passe de son plan de coulissement au plan d'obturation, l'élément 411 pousse la patte 2 de façon à amener la gouttière vers une position correspondant à la position d'étanchéité du joint 1.

On note que l'élément d'actionnement 411 est formé dans un support porté par le panneau 4, ce support portant un patin de guidage 412 coulissant dans une rampe de louvoiement 31 montée sur le montant 3.

Selon un deuxième mode de réalisation illustré par les figures 2 à 4, le joint 1 est solidaire en déplacements du panneau 4, le joint étant amené, en position d'obturation du panneau 4, contre une partie 32 du montant 3, comme le montre la figure 2.

Pour ce faire, on forme dans un support 41 porté par le panneau 4 une surface de réception 413 du joint 1 (le joint étant par exemple collé sur cette surface de réception), ce support portant un patin de guidage 412 coulissant dans une rampe de louvoiement 31 montée sur le montant 3.

On note que la surface de réception 413 s'étend au-delà du périmètre du panneau 4 pour présenter le joint 1 en regard de la partie 32 du montant 3.

Selon le présent mode de réalisation, la partie supérieure de la porte présente un cadre délimitant une baie. On prévoit par conséquent un joint 1 sur chaque bord latéral du panneau 4 et un joint 12 en partie supérieure du panneau 4. Préférentiellement, le joint 12 est prévu pour s'imbriquer par une liaison de type labyrinthe avec une extension 11 du joint 1 présentant une forme complémentaire de celle du joint 12, telle qu'illustré par la figure 4.

Un tel joint 12 est fixé sur le panneau 4 par exemple par une technique de surmoulage.

On note que, dans les deux modes de réalisation qui viennent d'être décrits, le joint 1 est de type tubulaire. En l'occurrence, un tel joint présente une cavité longitudinale 13 surmontée par une lèvre 14 destinée à être comprimée par le panneau (dans le cas du premier mode de réalisation) ou par une partie du montant (dans le cas du deuxième mode de réalisation).

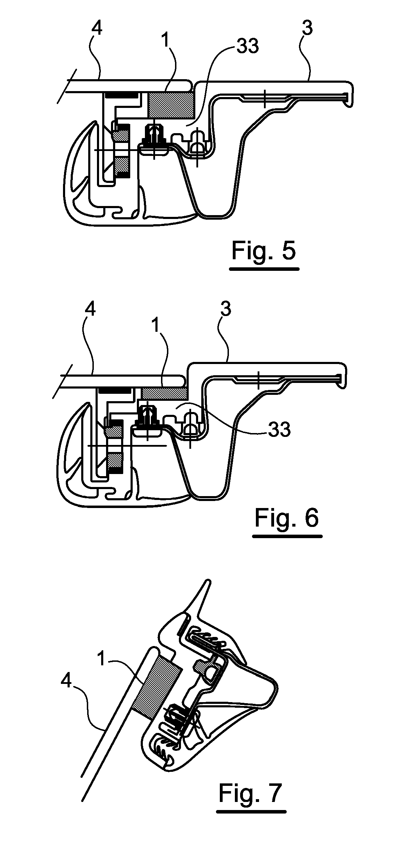

Selon un troisième mode de réalisation illustré par les figures 5 à 7, le joint 1 est un joint à haute compressibilité et est porté par le panneau 4 (le joint pouvant être également porté par le montant selon un autre mode de réalisation envisageable).

En position d'obturation du panneau, le joint 1 (alors en position d'étanchéité) s'intercale entre le panneau 4 et un rebord 33 du montant 3, tel que cela apparaît sur la figure 5.

Lors du déplacement du panneau 4 vers l'intérieur du véhicule, le joint 1 est comprimé contre le rebord 33, la capacité du joint à se comprimer évitant d'engendrer des frottements excessifs.

On note que les différents modes de réalisation qui viennent d'être décrits font apparaître des panneaux mobiles verticalement par rapport au sol, mais que l'invention peut également s'appliquer à d'autres cas, suivant la forme et le montage des portes.

## Revendications

1. Porte de véhicule automobile, comprenant un caisson de carrosserie et un ensemble vitré assemblés l'un à l'autre, ledit ensemble vitré comprenant au moins un panneau vitré mobile (4), susceptible de s'escamoter au moins partiellement à l'intérieur dudit caisson entre une position d'obturation et au moins une position d'ouverture, en coulissant dans un plan de coulissement par rapport à au moins un montant (3) solidaire dudit caisson de carrosserie ou de la carrosserie dudit véhicule,
**caractérisée en ce qu'**elle comprend des moyens de décalage dudit plan de coulissement vers l'intérieur dudit véhicule, par rapport à un plan d'obturation dans lequel se trouve ledit panneau mobile (4) en position d'obturation,
et **en ce que** ledit panneau mobile (4) agit sur au moins un joint d'étanchéité (1), de façon qu'il passe d'une position d'étanchéité à une position inactive, lorsque ledit panneau mobile (4) passe dudit plan d'obturation audit plan de coulissement, et inversement.

2. Porte de véhicule automobile selon la revendication 1, **caractérisée en ce que** ledit joint d'étanchéité (1) est monté mobile par rapport audit ou auxdits montants (3) de sorte que, dans ladite position inactive, ledit joint d'étanchéité (1) est décalé vers l'intérieur dudit véhicule par rapport à ladite position d'étanchéité, et éloigné dudit panneau mobile (4) et/ou du ou desdits montants (3).

3. Porte de véhicule automobile selon l'une quelconque des revendications 1 et 2, **caractérisée en ce que** ledit joint d'étanchéité (1) est porté par un support monté mobile sur ledit ou lesdits montants (3).

4. Porte de véhicule automobile selon la revendication 3, **caractérisée en ce que** ledit joint d'étanchéité (1) est monté pivotant sur ledit ou lesdits montants (3).

5. Porte de véhicule automobile selon la revendication 4, **caractérisée en ce que** ledit support comprend une pièce élastiquement déformable formant charnière.

6. Porte de véhicule automobile selon l'une des revendications 3 à 5, **caractérisée en ce que** ledit support présente une forme de gouttière (2) à l'intérieur de laquelle est monté ledit joint d'étanchéité (1), l'un des bords (21) de ladite gouttière (2) étant relié de façon mobile audit montant (3).

7. Porte de véhicule automobile selon l'une quelconque des revendications 3 à 6, **caractérisée en ce que** ledit support présente au moins une patte (22) destinée à coopérer avec un élément d'actionnement (411) porté par ledit panneau mobile (4).

8. Porte de véhicule automobile selon les revendications 6 et 7, **caractérisée en ce que** ladite patte (22) est formée sur le bord de ladite gouttière (2) opposé au bord (21) relié audit montant (3).

9. Porte de véhicule automobile selon l'une quelconque des revendications 7 et 8, **caractérisée en ce que** ledit élément d'actionnement (411) est porté par un support d'au moins un patin de coulissement (412) monté dans une rampe de guidage (31) solidaire du ou desdits montants (3).

10. Porte de véhicule automobile selon l'une des revendications 1 et 2, **caractérisée en ce que** ledit joint d'étanchéité (1) est porté par ledit panneau mobile (4), de façon que ledit joint (1) soit, en position d'étanchéité, comprimé contre le ou lesdits montants (3).

11. Porte de véhicule automobile selon la revendication 10, **caractérisée en ce que** ledit joint (1) est porté par un support (41) d'au moins un patin de coulissement (412) monté dans une rampe de guidage (31) solidaire du ou desdits montants (3).

12. Porte de véhicule automobile selon l'une quelconque des revendications 10 et 11, **caractérisée en ce que** ledit support (41) présente une surface (413) de réception dudit joint (1), s'étendant au-delà du périmètre dudit panneau (4) de façon à présenter ledit joint (1) en regard du ou desdits montants (3).

13. Porte de véhicule automobile selon l'une quelconque des revendications 1 à 12, **caractérisée en ce que** ladite porte présente deux montants (3) reliés par une traverse supérieure pour former un cadre, ledit joint d'étanchéité (1)s'étendant sur au moins une portion latérale et au moins une portion supérieure dudit cadre.

14. Porte de véhicule automobile selon la revendication 13, **caractérisée en ce que** ladite portion latérale et ladite portion supérieure sont reliées, en position d'étanchéité, par une liaison à labyrinthe.

15. Porte de véhicule automobile selon l'une quelconque des revendications 1 à 14, **caractérisée en ce que** ledit joint d'étanchéité (1) comprend un joint de type tubulaire.

16. Porte de véhicule automobile selon l'une quelconque des revendications 1 à 14, **caractérisée en ce que** ledit joint d'étanchéité (1) comprend un joint de type à haute compressibilité.

17. Ensemble vitré d'une porte comprenant un caisson de carrosserie et un ensemble vitré assemblés l'un à l'autre, ledit ensemble vitré comprenant au moins un panneau vitré mobile (4), susceptible de s'escamoter au moins partiellement à l'intérieur dudit caisson entre une position d'obturation et au moins une position d'ouverture, en coulissant dans un plan de coulissement par rapport à au moins un montant (3) solidaire dudit caisson de carrosserie ou de la carrosserie dudit véhicule,
**caractérisé en ce qu'**il comprend des moyens de décalage dudit plan de coulissement vers l'intérieur dudit véhicule, par rapport à un plan d'obturation dans lequel se trouve ledit panneau mobile (4) en position d'obturation,
et **en ce que** ledit panneau mobile (4) agit sur au moins un joint d'étanchéité (1), de façon qu'il passe d'une position d'étanchéité à une position inactive, lorsque ledit panneau mobile (4) passe dudit plan d'obturation audit plan de coulissement, et inversement.

18. Véhicule automobile équipé d'au moins une porte comprenant un caisson de carrosserie et un ensemble vitré assemblés l'un à l'autre, ledit ensemble vitré comprenant au moins un panneau vitré mobile (4), susceptible de s'escamoter au moins partiellement à l'intérieur dudit caisson entre une position d'obturation et au moins une position d'ouverture, en coulissant dans un plan de coulissement par rapport à au moins un montant (3) solidaire dudit caisson de carrosserie ou de la carrosserie dudit véhicule,
**caractérisé en ce que** ladite porte comprend des moyens de décalage dudit plan de coulissement vers l'intérieur dudit véhicule, par rapport à un plan d'obturation dans lequel se trouve ledit panneau mobile (4) en position d'obturation,
et **en ce que** ledit panneau mobile agit sur au moins un joint d'étanchéité (1), de façon qu'il passe d'une position d'étanchéité à une position inactive, lorsque ledit panneau mobile (4) passe dudit plan d'obturation audit plan de coulissement, et inversement.
